# EUROPEAN PATENT SPECIFICATION

(11) **EP 4 109 745 B1**
(45) Date of publication and mention of the grant of the patent: **05.11.2025**
(21) Application number: 22382476.4
(22) Date of filing: 18.05.2022
(51) Int. Cl.: H02S 50/10

(54) **FAILURE OR GROUNDING DETECTION EQUIPMENT IN ELECTRIC POWER GENERATION FACILITIES WITH PHOTOVOLTAIC MODULES**
FEHLER- ODER ERDUNGSERKENNUNGSAUSRÜSTUNG IN ELEKTRISCHEN ENERGIEERZEUGUNGSANLAGEN MIT PHOTOVOLTAISCHEN MODULEN
ÉQUIPEMENT DE DÉTECTION DE DÉFAILLANCE OU DE MISE À LA TERRE DANS DES INSTALLATIONS DE PRODUCTION D'ÉNERGIE ÉLECTRIQUE AVEC DES MODULES PHOTOVOLTAÏQUES

(30) Priority: 23.06.2021 ES 202131323 U
(43) Date of publication of application: 28.12.2022
(73) Proprietor: Ignis Renovables, S.L., 28016 Madrid (ES)
(72) Inventor: PARRA ESTESO, David, 50012 Zaragoza (ES)
(74) Representative: Pons IP

(56) References cited:
- CN-A- 104 617 873
- US-A1- 2014 239 968
- US-A1- 2014 253 138

## Description

### Object of the invention

The invention, as expressed in the title of this specification, relates to an equipment for detecting ground failures or faults in electric power generation installations with photovoltaic modules providing, to the function for which it is intended, advantages and features that are described in detail later.

The object of the present invention is an equipment basically made up of a suitcase with various internal elements such as cables with the capacity to withstand and interrupt fault current intensities of several hundred or thousands of amperes, electric direct current probes, protection, measurement, communication elements, control unit and power supply, as well as external elements such as clamp ammeters, is specially studied with the purpose of helping to detect and locate ground failures and faults or portions connected thereto, in electric power generation installations of photovoltaic origin with the negative pole of the continuous electric power generation system connected to ground.

### Field of application of the invention

The field of application of the present invention falls within the sector of the industry dedicated to manufacturing equipment for electric installations, focussing on the field of pieces of equipment for measuring electric current in power generation installations, in particular for detecting and locating ground failures or faults or portions connected thereto, in electric power generation installations of photovoltaic origin. The document US 2014/253138A is a relevant prior art.

### Background of the invention

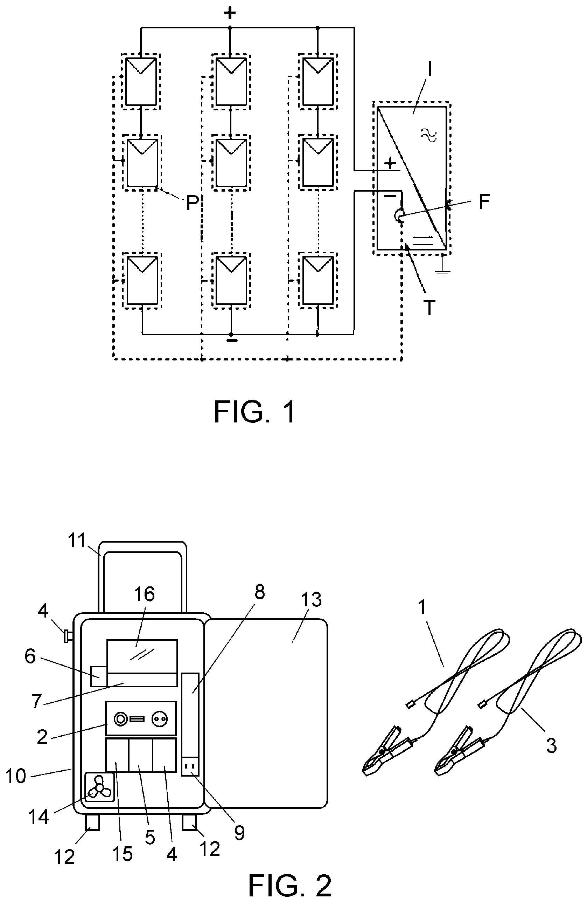

In photovoltaic power generation installations with the negative pole of the continuous power generation system connected to the ground system of the installation (also known as installations with the negative grounded), the ground connection is usually made through a fuse cutout, called a GFDI (Ground Fault Detector Interruptor) that guarantees the interruption of the circuit in which it is inserted when a ground failure or fault occurs. See Figure 1.

The ground fault on the power generation side before the input to the power inverter (called the continuous generation system of the photovoltaic installation because the power is generated in the form of voltage and direct current) occurs when a conductor or active element of said installation unexpectedly makes electric contact at some point with the ground system of the installation or portions connected thereto. This contact can occur between the ground system or portions connected thereto and the solar cable of the photovoltaic modules, the photovoltaic module itself, the elements that connect the modules to each other, the power cables that transport the power generated by the photovoltaic modules to the power inverter, and ultimately at any point in the installation wherein there is an active portion and an element of the ground system or connected thereto. At the moment in which this electric contact occurs, a "ground failure" or "fault" current occurs, which closes through the circuit wherein the GFDI fuse is installed and which, when it exceeds a certain value of calibrated current intensity of said fuse for a period of time, melts one of the elements thereof interrupts said current.

Once the GFDI fuse interrupts the circuit, the direct current power generation system remains in isolated poles, because the connection to ground, which is made through said GFDI fuse-circuit, is interrupted, and therefore no failure or fault current circulates. These fuses, which are installed in the power inverter, usually have a striker that activates a signal in the control system of the equipment, generating an alarm or warning and stopping the power inverter.

In this situation, the way to detect and locate where the ground failure is in the installation is by using electric voltage measurement equipment (multimeters). In the pole where the fault is found, we will find fault voltages of up to 1450 Vdc (volts of direct voltage; the value of the fault voltage will depend on where the fault is located in the photovoltaic installation). As all the negative poles that reach the power inverter are connected to one same busbar, it is necessary to disconnect them one by one (up to 24 or more in some cases) to detect, by measuring voltages, which pole has the ground fault. All foregoing works must be done with the presence of voltage, generated by the modules, and are therefore works under voltage, the application of labour and prevention legislation corresponding to said works being required.

Once the pole with the fault has been detected, the portion of the installation that generates power through said pole is identified, isolated and searched string by string (set of photovoltaic modules electrically connected in series or parallel) until detecting in which of them the fault is located. This is an operation that, due to the very design of photovoltaic installations, if it is performed during daylight hours and therefore with solar radiation, it must also be done with voltage, with the consequent risk for technical personnel. In addition, having to disconnect poles/circuits one by one until detecting where the failure is entails a high cost in working hours.

Another option for detecting ground failures or faults in electric installations is through the use of insulation meters, called megger or megohmmeter (because it is a type of megohmmeter, operation based on Ohm's law), but it exhibits the same drawbacks as in the previous case, work is carried out in circuits with electric voltage and all the negative poles that are joined at the common busbar of the inverter must be disconnected one by one to detect which of them has the fault. Using a megger, and to avoid working with voltage, it would be possible to work outside daylight hours, but it would mean leaving an inverter stopped without generating power from the moment it stops until night, and the lack of light in an outdoor installation would make it difficult to detect the incidence or fault (detection that is often carried out visually), although it would not avoid having to disconnect the negative poles of the common busbar of the inverter one by one to detect where the fault is located.

Moreover, in most of the photovoltaic installations on an industrial scale that are built today, the photovoltaic modules are mounted on metal structures, called trackers because they "track" the path of the sun from east to west on a daily basis. It often happens that when a ground fault occurs, if it occurs in certain circumstances or points of the tracker, as the tracker is in motion -even if the GFDI fuse has blown and the power inverter has stopped- the contact originating the fault disappears, the detection thereof being impossible with a multimeter or a megger because the fault has disappeared. However, once the GFDI fuse is reset and the power inverter is started, as the movement of the tracker is repeated on a daily basis, the ground fault situation may occur again and the GFDI fuse may blow again since the origin of the fault has not been resolved. These malfunctions are difficult to detect and, therefore, the detection thereof has a high cost in working hours.

The objective of the present invention is to therefore provide a practical solution to said problem through the development of equipment, preferably portable, since this invention can form part of other pieces of equipment of the photovoltaic installation, such as the power inverter, taking advantage of components and systems of said equipment to provide the solution, which enables the detection of ground failures or faults to be performed in a much faster, more practical and safer way, which entails, among others, economic benefits due to the increase in availability of the power generation installations and therefore of the power generated, and a competitive advantage of the pieces of equipment and systems of a photovoltaic installation providing this solution.

### Description of the invention

The equipment for detecting ground failures or faults in electric power generation installations with photovoltaic modules proposed by the invention as recited in claim 1 with further advantageous inventions as recited in the dependent claims is configured as the ideal solution for the aforementioned objective, with the characterising details that make it possible and that conveniently distinguish it included in the final claims that accompany this description.

Specifically, the equipment proposed by the invention enables the ground failure or fault current to be instantaneously restored, between the negative busbar of the power inverter where all the negative poles are connected, and the ground of the installation, and by means of clamp ammeters placed on the poles, to detect through which of them said fault current circulates. Thus, once the pole with the fault has been detected, without the need to measure voltages or disconnect circuits under voltage, the portion of the installation where the ground fault is located will be located and identified.

Once the portion of the installation where the fault is has been located, said portion is isolated (being able to put the rest of the installation back into service and generate power), and the measurement can be repeated until detecting in which group of strings the fault is located. As the measurement is based on the detection of the instantaneous circulation of a fault current, the test could be carried out even with a single string to check the status of the module and whether the ground fault is, for example, an internal fault.

More specifically, the proposed equipment comprises, housed in at least one suitcase, essentially a series of connection elements such as clamp ammeters and connection elements with sufficient breaking capacity to withstand and interrupt fault current intensities of several hundred or thousands of amperes, which enable the electric current to be restored as a result of the fault, a series of electric direct current probes for detecting the electric pole or cable through which said current circulates, a series of protection, measurement and communication elements, as well as a control unit in addition to an electric power supply by means of batteries and/or directly from the mains power.
- The proposed equipment comprises an element with on-load breaking capacity, which is the element that instantaneously restores the fault current (such as, for example, a power contactor). This current would be detected by the clamp ammeter placed on the pole where the ground fault was, sending a current circulation signal to the control unit, which will show on an electronic display the ammeter probe through which the current has circulated, being the pole or electric conductor corresponding to said clamp in which the ground fault is located in the installation. Once the pole with the fault has been detected, the element with on-load breaking capacity will interrupt the circuit, interrupting the fault current.
- On the same electric line or circuit where the element with on-load breaking capacity is installed and through which the fault current circulates, one or two (to seek redundancy and increase safety) direct current measurement transformers (normally Hall effect transformers) will be installed which, upon detecting that this failure or fault current is circulating, sends a signal to the control unit which, with a short delay, opens said element, interrupting the fault current. In addition, a fuse with adequate features is installed in said electric circuit to protect the equipment and ensure the opening of the circuit.

In the event that the fault could not be detected upon arrival at the installation, because the electric contact that caused the fault did not remain, for example, due to the movement of the active elements installed in the trackers due to the solar tracking movement itself, or for other reasons, the proposed equipment would be connected and installed in the same way as described above, removing the GFDI fuse, and leaving the element with on-load breaking capacity permanently closed. In this way, if there is no failure, no current circulates through said element. And if the fault occurs, the Hall effect transformer detects the current, informs the control unit of the equipment and opens said element, the pole or electric conductor with the fault having already been detected by the current probes by means of a variation in current measurements. The control unit of the proposed equipment will send a signal to the control unit of the power inverter (simulating the fault signal produced by the GFDI or in series with any other alarm signal) to stop said inverter.

Once the pole with the ground fault has been detected, we can identify (since the poles are identified one by one and referenced to a portion of the installation) which portion of the installation has the fault, being able to reuse the equipment of the invention in the same way, to detect the string, the set of modules or even the photovoltaic module inside the string, where the fault is located, following the same principle of providing continuity-closing the circuit between the negative and ground through the element with on-load breaking capacity so that when the fault current is restored, the equipment detects through the current probes in which pole the fault is located.

In this way, without the need to perform work under voltage or disconnect cables, the equipment of the invention enables a ground fault to be detected in a photovoltaic installation, saving many hours of work, avoiding risky situations and increasing the amount of power generated by the photovoltaic installation.

In a preferred embodiment, the proposed equipment, which in order to be portable, will be used with two rigid, watertight suitcases, with wheels, one for the equipment itself and the other for transporting the clamp ammeters and connection cables, comprises the following:
An element to restore the fault current, with on-load breaking capacity, such as a contactor with the capacity to withstand and clear direct currents. There are contactors with the capacity to withstand and clear fault currents of several thousand amperes continuously, with thousands of iterations. Moreover, these contactors ensure a reduced number of much larger fault current clearance iterations, in times of less than 100 ms.

A control unit, wherein the closing and opening time of the element with on-load breaking capacity is configured once the fault current is detected, as well as the type of relays or signals that will be activated to initiate a stop sequence in another piece or other pieces of equipment, in addition to other parameters related to the features of the installation and the measurement to be carried out. By default, this control unit will have a short duration program for permanent faults and another for faults that appear only in certain situations (for example, with the movement of the trackers or position of the electric wiring) wherein it is necessary to leave the equipment permanently connected and installed as described above, and the trigger threshold (amperes in the contactor) can be configured, all of the above, preferably, through a touch screen.

The equipment is powered by a battery with sufficient autonomy to carry out several tests, and with direct connection to the 220 V alternating voltage mains to use the equipment in tests permanently and wherein the mains power is accessible. Additionally, by being a photovoltaic installation, the equipment has a charge regulator to be able to connect to a photovoltaic panel of said installation and charge the aforementioned battery.

Current measurement clamps or probes for measuring direct currents, with sufficient full scale and capacity to embrace the electric cables, to measure the current that circulates through said electric cables/poles of the installation, and two current probes (one of them redundant) to measure the current intensity that circulates through this circuit. These clamps will be powered from the equipment itself, and will be connected to the suitcase by means of connectors with IP67 protection so that they can be used outdoors. The number of clamps may vary, and in the event that there is no clamp for each pair of poles to be measured, it will be necessary to repeat the test -in the event that the fault is not located- placing the clamps again on the poles that have not been tested.

The equipment, as previously mentioned, is operated by means of a touch screen wherein the circulating currents can be read, and the operating parameters, mainly trigger threshold and fault clearance time, can be configured and the channel/pole wherein the fault is located can be indicated, etc.

Additionally, the equipment has communication elements that provide it with connectivity capacity by means of WIFI and SIM card so that it can send alerts, information on operating variables, and other information that is considered necessary, in addition to NFC (Near Field Communication) communication capacity.

Preferably, the equipment has an emergency stop button to stop the measurement and interrupt the circulation of the fault current through the same.

Likewise, it comprises protection elements, such as an 800 A fuse, previously installed and in the same series circuit of the element that restores and interrupts the current.

The connection of the equipment, both to the busbars or plates wherein the negatives are connected, as well as to the ground plate, is made by means of lathe or clamp-type connectors, or any other that enables a safe contact, with a cable with a cross section sufficient to withstand the intensity of the fault current, which, being a short-term measurement, enables cables with a smaller cross section to be used, the connection being through fast power connectors with an IP67 rating that will be inserted in the suitcase.

For determining the cross section of the conductors, the connectors, the components and the equipment in general, the corresponding RD and UNE/EN standards will be taken into account, or the regulations that apply in each country, applying the corresponding safety coefficients and taking into account that the time during which the fault current will be restored or allowed to pass will be very brief.

The purpose of the proposed equipment is, therefore, to detect and locate ground failures or faults in photovoltaic electric power generation installations, mainly on an industrial scale, with the negative pole of the installation connected to ground, so that by facilitating the fault detection and location thereof, the malfunction search times are reduced and therefore, once the cause that has produced the fault has been repaired, the installation can be put into service earlier and start generating electric power, there being a double economic benefit of reducing working hours and increasing the amount of electric power generated, in addition to reducing work on elements or equipment under voltage, thus reducing risks to people and the installation.

### Description of the drawings

To complement the description that is being made and for the purpose of helping to make the features of the invention more readily understandable, a set of figures is attached to this specification as an integral part thereof, in which the following is depicted in an illustrative and non-limiting manner:
Figure number 1 shows a schematic representation of the connection of a photovoltaic panel installation to the GFDI fuse circuit discussed in the background section; and
Figure number 2 shows a very schematic representation of an example of the equipment object of the invention, wherein the main elements that it comprises have been represented.

### Preferred embodiment of the invention

In view of the aforementioned figures, and according to the numbering adopted, a non-limiting exemplary embodiment of the equipment for detecting ground failures or faults in electric power generation installations with photovoltaic modules of the invention can be observed, comprising what is described in detail below.

Thus, according to Figure 1, a schematic representation of a photovoltaic electricity generation system can be seen with the negative of the installation connected to ground through a GFDI fuse (F), which has been discussed in the background section, showing the connection of photovoltaic panels (P) to the circuit with said GFDI fuse (F) in the power inverter (I) and the ground system (T), represented by a dashed line.

And, as can be seen in the representation of Figure 2, the equipment of the invention essentially comprises:
- different external (1) and internal (2) connection elements with the capacity to restore the electric current as a result of the fault, and with on-load breaking capacity,
- a series of electric direct current probes (3) to detect the electric pole or cable through which said current circulates,
- electric protection elements (4),
- measurement elements (5),
- communication module (6)
- a control unit (7),
- and an electric power supply by means of batteries (8) and/or directly from the mains power (9).

Preferably, all the aforementioned elements, except for the direct current probes (3) and the external connection elements (1), are included housed inside an easily transportable suitcase (10). Preferably a rigid, impact-proof outdoor suitcase (10), which to facilitate the transport thereof has an extendable handle (11) and drive wheels (12) at the base thereof.

Preferably, the suitcase (10) has a cover (13), on one or more of the sides thereof, which enables quick access to various connectors, without losing the degree of IP protection, so that it is only necessary to open said cover (13) to connect the external connection elements (1), the current probes (3), the power supply (9) and the communications (6).

Preferably, the suitcase (10) contains, in the case of permanently performing measurements, an internal fan (14) for cooling the components, which will be automatically activated when the control unit (7) detects, through a temperature probe (15) also installed inside the suitcase (10), that the temperature exceeds a certain threshold.

Preferably, the suitcase (10) includes, in a manner accessible from the outside, an emergency stop button-type protection element (4) that enables the test in progress to be stopped, mainly by interrupting the fault current.

In any case, the external connection elements (1) that the equipment of the invention comprises are preferably formed by conductive electric cables with clamp or lathe-type connectors and additionally MC4-type terminals or the like, which enable a connection with the connectors of the solar panels, which, suitably sized, will be connected, by means of power connectors that can be inserted in the suitcase (10), to the internal connection elements (2), which must have sufficient capacity to withstand and interrupt fault current intensities of several hundred or thousands of amperes, with a safety margin that enables a reduced number of fault interruption iterations with higher fault current intensities, in a time of milliseconds.

Preferably, the equipment comprises several direct current measurement probes (3) based on the Hall effect principle, with a suitable and sufficient jaw opening to embrace the corresponding electric poles or conductors.

Preferably, the equipment comprises a fuse as one of the protection elements (4), installed in the circuit through which the fault current restored by the equipment circulates, and the nominal current and voltage of which will vary, depending on the contactor and the features of the installation on which the test will be performed and being able to have a striker for actuating a micro contact that sends a signal to the control unit (7) or directly inserted in the activation circuit of the internal connection element (2).

Preferably, as measurement elements (5), it comprises Hall effect transformers, which will be redundant, to read the fault current restored through the equipment and the control unit (7) that will receive the value of the current measurement of said transformers.

Preferably, the control unit (7) comprises programmable software that activates and deactivates the internal elements (2) to restore or interrupt the current depending on the programming thereof and the reading of other protection (4) and measurement (5) elements.

Preferably, the control unit (7) is connected to a display, preferably a touch screen (16), as an interface to communicate with the operator and to enable the operator to modify or adjust the operating conditions of the equipment and the tests within a certain margin so as not to put the installation, the equipment itself or people at risk.

Preferably, the communications module (6) is a unit that enables the equipment to communicate, via Wi-Fi and the Internet, sending information about the operation thereof, the value of the variables and alarms or warnings, being able to communicate remotely or near field communication (NFC).

Finally, it should be noted that, preferably, the battery power supply (8) is made up of an uninterruptible power supply (UPS) battery or system, which enables tests to be performed in portions of the installation where there is no access to the mains power.

To do this, the equipment has a device that enables said UPS to be powered from the very photovoltaic modules of the installation, to enable it to perform measurements and tests permanently. In addition, it also envisages the possibility of being able to be directly connected to the mains power (9).

Having sufficiently described the nature of the present invention, as well as how to put it into practice, it is not considered necessary to further describe it so that any person skilled in the art may comprehend its scope and the advantages derived from it.

## Claims

1. An equipment for detecting ground failures or faults in electric power generation installations with photovoltaic modules, comprising:
- different external (1) and internal (2) connection elements with the capacity to restore the electric current as a result of the fault, and with on-load breaking capacity, wherein the external connection elements (1) are able to be detachably connected with the connectors of the photovoltaic modules,
- a series of electric direct current probes (3) based on the Hall effect to detect the electric pole or cable through which said current circulates, wherein said probes exhibit a jaw opening suitable for embracing the electric poles or conductors of the photovoltaic modules,
- electric protection elements (4),
- measurement elements (5),
- communication module (6)
- a control unit (7), and
- an electric power supply by means of batteries (8) and/or directly from the mains power (9); **characterised in that** the equipment is configured to be connected, in use, in parallel with a melted Ground Fault Detector Interrupter fuse or an element that performs the function of the Ground Fault Detector Interrupter, between the common negative busbar to which all the negative poles and the ground of the installation are connected; and
wherein the electric direct current probes (3) are configured to be placed on the negative or positive poles, but only on one of them and to send a current measurement signal to the control unit (7) that will collect said values.

2. The equipment for detecting ground failures or faults in electric power generation installations with photovoltaic modules, according to any of the preceding claims, **characterised in that** it comprises an internal fan (14) for cooling the components, which will be automatically activated when the control unit (7) detects, through a temperature probe (15) also installed inside the suitcase (10), that the temperature exceeds a certain threshold.

3. The equipment for detecting ground failures or faults in electric power generation installations with photovoltaic modules, according to any of the preceding claims, **characterised in that** it comprises an emergency stop button-type protection element (4) that enables the test in progress to be stopped, mainly by interrupting the fault current.

4. The equipment for detecting ground failures or faults in electric power generation installations with photovoltaic modules, according to any of the preceding claims, **characterised in that** the internal connection elements (2) are equipped with the capacity to withstand and interrupt fault current intensities of several hundred or thousands of amperes, with a safety margin that enables a reduced number of fault interruption iterations with higher fault current intensities, in a time of milliseconds.

5. The equipment for detecting ground failures or faults in electric power generation installations with photovoltaic modules, according to any of the preceding claims, **characterised in that** it comprises a fuse as one of the protection elements (4), installed in the circuit through which the fault current restored by the equipment circulates, and the nominal current and voltage of which will vary, depending on the contactor and the features of the installation.

6. The equipment for detecting ground failures or faults in electric power generation installations with photovoltaic modules, according to claim 5, **characterised in that** the fuse that acts as protection (4) has a striker for actuating a micro contact that sends a signal to the control unit (7).

7. The equipment for detecting ground failures or faults in electric power generation installations with photovoltaic modules, according to claim 5, **characterised in that** the fuse that acts as protection (4) is inserted in the activation circuit of the internal connection element (2).

8. The equipment for detecting ground failures or faults in electric power generation installations with photovoltaic modules, according to any of the preceding claims, **characterised in that**, as measurement elements (5), it comprises redundant Hall effect transformers, to read the fault current restored through the equipment and the control unit (7) that will receive the value of the current measurement of said transformers.

9. The equipment for detecting ground failures or faults in electric power generation installations with photovoltaic modules, according to any of the preceding claims, **characterised in that** the control unit (7) comprises a programmable software that activates and deactivates the internal elements (2) to restore or interrupt the current depending on the programming thereof and the reading of other protection (4) and measurement (5) elements.

10. The equipment for detecting ground failures or faults in electric power generation installations with photovoltaic modules, according to any of the preceding claims, **characterised in that** the communications module (6) is a unit that enables the equipment to communicate, via Wi-Fi and the Internet, being able to communicate remotely or near field communication (NFC).

11. The equipment for detecting ground failures or faults in electric power generation installations with photovoltaic modules, according to any of the preceding claims, **characterised in that** the battery power supply (8) is made up of an uninterruptible power supply (UPS) battery or system.

12. The equipment for detecting ground failures or faults in electric power generation installations with photovoltaic modules, according to claim 11, **characterised in that** it has a device that enables the UPS to be powered from the very photovoltaic modules of the installation.

13. The equipment for detecting ground failures or faults in electric power generation installations with photovoltaic modules, according to any of the preceding claims, **characterised in that** all the aforementioned elements, except for the direct current probes (3) and the external connection elements (1), are included housed inside an easily transportable suitcase (10).

14. The equipment for detecting ground failures or faults in electric power generation installations with photovoltaic modules, according to claim 13, **characterised in that** the suitcase (10) is a rigid impact-proof outdoor suitcase, with an extendable handle (11) and drive wheels (12) at the base thereof.

15. The equipment for detecting ground failures or faults in electric power generation installations with photovoltaic modules, according to claim 13 or 14, **characterised in that** the suitcase (10) has a cover (13) on one or more of the sides thereof, which enables quick access to various connectors, without losing the degree of IP protection, to connect the external connection elements (1), the current probes (3), the power supply (9) and the communications (6).

## Patentansprüche

1. Gerät zur Erkennung von Erdungsfehlern oder -störungen in Stromerzeugungsanlagen mit Photovoltaikmodulen, umfassend:
- verschiedene externe (1) und interne (2) Verbindungselemente mit der Fähigkeit, den elektrischen Strom nach dem Fehler wiederherzustellen, und mit Lastabschaltvermögen, wobei die externen Verbindungselemente (1) lösbar mit den Anschlüssen der Photovoltaikmodule verbunden werden können,
- eine Reihe von auf dem Hall-Effekt basierenden Gleichstromsonden (3) zur Erkennung des elektrischen Pols oder Kabels, durch den oder das der Strom fließt, wobei die Sonden eine Zangenöffnung aufweisen, die zum Umfassen der elektrischen Pole oder Leiter der Photovoltaikmodule geeignet ist,
- elektrische Schutzelemente (4),
- Messelemente (5),
- ein Kommunikationsmodul (6)
- eine Steuereinheit (7) und
- eine Stromversorgung über Batterien (8) und/oder direkt aus dem Stromnetz (9); **dadurch gekennzeichnet, dass** das Gerät so ausgebildet ist, dass es im Betrieb parallel zu einer durchgeschmolzenen Fehlerstrom-Schutzschalter-Sicherung oder einem Element, das die Funktion des Fehlerstrom-Schutzschalters erfüllt, zwischen der gemeinsamen negativen Sammelschiene, an die alle negativen Pole angeschlossen sind, und der Erdung der Anlage angeschlossen ist; und
**dadurch gekennzeichnet, dass** die elektrischen Gleichstromsonden (3) so ausgebildet sind, dass sie an den negativen oder positiven Polen, jedoch nur an einem von beiden, angebracht werden und ein Strommesssignal an die Steuereinheit (7) senden, die diese Werte erfasst.

2. Gerät zur Erkennung von Erdschlüssen oder Fehlern in Stromerzeugungsanlagen mit Photovoltaikmodulen gemäß einem der vorhergehenden Ansprüche, **dadurch gekennzeichnet, dass** es einen internen Lüfter (14) zur Kühlung der Komponenten umfasst, der automatisch aktiviert wird, wenn die Steuereinheit (7) über einen ebenfalls im Koffer (10) installierten Temperaturfühler (15) erkennt, dass die Temperatur einen bestimmten Schwellenwert überschreitet.

3. Gerät zur Erkennung von Erdungsfehlern oder -störungen in Stromerzeugungsanlagen mit Photovoltaikmodulen nach einem der vorhergehenden Ansprüche, **dadurch gekennzeichnet, dass** es ein Schutzelement (4) in Form eines Not-Aus-Tasters umfasst, das den Abbruch des laufenden Tests ermöglicht, hauptsächlich durch Unterbrechung des Fehlerstroms.

4. Gerät zur Erkennung von Erdungsfehlern oder -störungen in Stromerzeugungsanlagen mit Photovoltaikmodulen nach einem der vorhergehenden Ansprüche, **dadurch gekennzeichnet, dass** die internen Verbindungselemente (2) in der Lage sind, Fehlerströmen in der Stärke von mehreren Hundert oder Tausend Ampere standzuhalten und diese zu unterbrechen, mit einer Sicherheitsmarge, die eine reduzierte Anzahl von wiederholten Fehlerunterbrechungen bei höheren Fehlerstromstärken im Millisekundenbereich ermöglicht.

5. Gerät zur Erkennung von Erdungsfehlern oder -störungen in Stromerzeugungsanlagen mit Photovoltaikmodulen nach einem der vorhergehenden Ansprüche, **dadurch gekennzeichnet, dass** es als eines der Schutzelemente (4) eine Sicherung umfasst, die in dem Stromkreis eingebaut ist, durch den der von der Gerät wiederhergestellte Fehlerstrom fließt, und deren Nennstrom und -spannung je nach Schütz und den Merkmalen der Anlage variieren.

6. Gerät zur Erkennung von Erdungsfehlern oder -störungen in Stromerzeugungsanlagen mit Photovoltaikmodulen nach Anspruch 5, **dadurch gekennzeichnet, dass** die als Schutz dienende Sicherung (4) einen Schlagbolzen zur Betätigung eines Mikrokontakts aufweist, der ein Signal an die Steuereinheit (7) sendet.

7. Gerät zur Erkennung von Erdungsausfällen oder -fehlern in Stromerzeugungsanlagen mit Photovoltaikmodulen nach Anspruch 5, **dadurch gekennzeichnet, dass** die als Schutz dienende Sicherung (4) in den Aktivierungskreis des internen Verbindungselements (2) eingefügt ist.

8. Gerät zur Erkennung von Erdungsfehlern oder -störungen in Stromerzeugungsanlagen mit Photovoltaikmodulen nach einem der vorhergehenden Ansprüche, **dadurch gekennzeichnet, dass** es als Messelemente (5) redundante Hall-Effekt-Transformatoren umfasst, um den durch das Gerät wiederhergestellten Fehlerstrom zu erfassen, und die Steuereinheit (7), die den Wert der Strommessung der Transformatoren empfängt.

9. Gerät zur Erkennung von Erdausfällen oder -fehlern in Stromerzeugungsanlagen mit Photovoltaikmodulen nach einem der vorhergehenden Ansprüche, **dadurch gekennzeichnet, dass** die Steuereinheit (7) eine programmierbare Software umfasst, die die internen Elemente (2) aktiviert und deaktiviert, um den Strom je nach ihrer Programmierung und dem Ablesen anderer Schutz- (4) und Messelemente (5) wiederherzustellen oder zu unterbrechen.

10. Gerät zur Erkennung von Erdungsfehlern oder -störungen in Stromerzeugungsanlagen mit Photovoltaikmodulen nach einem der vorhergehenden Ansprüche, **dadurch gekennzeichnet, dass** das Kommunikationsmodul (6) eine Einheit ist, die es dem Gerät ermöglicht, über WLAN und das Internet zu kommunizieren, wobei es in der Lage ist, aus der Ferne oder über Nahfeldkommunikation (NFC) zu kommunizieren.

11. Gerät zur Erkennung von Erdungsausfällen oder -fehlern in Stromerzeugungsanlagen mit Photovoltaikmodulen nach einem der vorhergehenden Ansprüche, **dadurch gekennzeichnet, dass** die Batteriestromversorgung (8) aus einer Batterie oder einem System zur unterbrechungsfreien Stromversorgung (USV) besteht.

12. Gerät zur Erkennung von Erdungsausfällen oder -fehlern in Stromerzeugungsanlagen mit Photovoltaikmodulen nach Anspruch 11, **dadurch gekennzeichnet, dass** es eine Vorrichtung aufweist, welche es ermöglicht, die USV über die Photovoltaikmodule der Anlage zu versorgen.

13. Gerät zur Erfassung von Erdungsfehlern oder -störungen in Stromerzeugungsanlagen mit Photovoltaikmodulen nach einem der vorhergehenden Ansprüche, **dadurch gekennzeichnet, dass** alle vorgenannten Elemente mit Ausnahme der Gleichstromsonden (3) und der externen Verbindungselemente (1) in einem leicht transportierbaren Koffer (10) untergebracht sind.

14. Gerät zur Erfassung von Erdungsfehlern oder -störungen in Stromerzeugungsanlagen mit Photovoltaikmodulen nach Anspruch 13, **dadurch gekennzeichnet, dass** der Koffer (10) ein starrer, stoßfester Outdoorkoffer mit einem ausziehbaren Griff (11) und Antriebsrädern (12) an der Unterseite ist.

15. Gerät zur Erkennung von Erdungsfehlern oder -störungen in Stromerzeugungsanlagen mit Photovoltaikmodulen nach Anspruch 13 oder 14, **dadurch gekennzeichnet, dass** der Koffer (10) an einer oder mehreren seiner Seiten eine Abdeckung (13) aufweist, die einen schnellen Zugang auf verschiedene Anschlüsse ermöglicht, ohne dass der IP-Schutzgrad verloren geht, um die externen Verbindungselemente (1), die Stromsonden (3), die Stromversorgung (9) und die Kommunikation (6) anzuschließen.

## Revendications

1. Équipement de détection de défaillances ou de défauts de terre dans des installations de production d'énergie électrique avec des modules photovoltaïques, comprenant :
- différents éléments de connexion externes (1) et internes (2) avec la capacité de rétablir le courant électrique à la suite d'un défaut, et avec une capacité de coupure en charge, dans lequel les éléments de connexion externes (1) peuvent être connectés de manière libérable aux connecteurs des modules photovoltaïques,
- une série de sondes électriques à courant continu (3) basées sur l'effet Hall pour détecter le poteau ou le câble électrique dans lequel ledit courant circule, dans lequel lesdites sondes présentent une ouverture de mâchoire appropriée pour embrasser les poteaux électriques ou les conducteurs des modules photovoltaïques,
- des éléments de protection électrique (4),
- des éléments de mesure (5),
- un module de communication (6)
- une unité de commande (7), et
- une alimentation en énergie électrique au moyen de batteries (8) et/ou directement à partir de l'énergie de réseau (9) ; **caractérisé en ce que** l'équipement est conçu pour être connecté, en utilisation, en parallèle avec un fusible interrupteur de détecteur de défaut de terre fondu ou un élément qui réalise la fonction de l'interrupteur de détecteur de défaut de terre, entre la barre omnibus négative commune à laquelle tous les pôles négatifs et la terre de l'installation sont connectés ; et
Dans
lequel les sondes électriques à courant continu (3) sont conçues pour être placées sur les pôles négatifs ou positifs, mais seulement sur l'un d'entre eux et pour envoyer un signal de mesure du courant à l'unité de commande (7) qui recueillera lesdites valeurs.

2. Équipement de détection de défaillances ou de défauts de terre dans des installations de production d'énergie électrique avec des modules photovoltaïques, selon l'une quelconque des revendications précédentes, **caractérisé en ce qu'**il comprend un ventilateur interne (14) pour le refroidissement des composants, qui sera automatiquement activée lorsque l'unité de commande (7) détecte, par le biais d'une sonde de température (15) également installée à l'intérieur de la valise (10), que la température dépasse un certain seuil.

3. Équipement de détection de défaillances ou de défauts de terre dans des installations de production d'énergie électrique avec des modules photovoltaïques, selon l'une quelconque des revendications précédentes, **caractérisé en ce qu'**il comprend un élément de protection (4) de type bouton d'arrêt d'urgence qui permet d'arrêter le test en cours, principalement en interrompant le courant de défaut.

4. Équipement de détection de défaillances ou de défauts de terre dans des installations de production d'énergie électrique avec des modules photovoltaïques, selon l'une quelconque des revendications précédentes, **caractérisé en ce que** les éléments de connexion internes (2) sont équipés de la capacité de supporter et d'interrompre des intensités de courant de défaut de plusieurs centaines ou milliers d'ampères, avec une marge de sécurité qui permet un nombre réduit d'itérations d'interruption de défaut avec des intensités de courant de défaut plus élevées, en un temps de quelques millisecondes.

5. Équipement de détection de défaillances ou de défauts de terre dans des installations de production d'énergie électrique avec des modules photovoltaïques, selon l'une quelconque des revendications précédentes, **caractérisé en ce qu'**il comprend un fusible comme l'un des éléments de protection (4), installé dans le circuit à travers lequel le courant de défaut rétabli par l'équipement circule, et dont le courant et la tension nominaux varieront, en fonction du contacteur et des caractéristiques de l'installation.

6. Équipement de détection de défaillances ou de défauts de terre dans des installations de production d'énergie électrique avec des modules photovoltaïques, selon la revendication 5, **caractérisé en ce que** le fusible qui agit comme protection (4) a un percuteur pour actionner un micro-contact qui envoie un signal à l'unité de commande (7).

7. Équipement de détection de défaillances ou de défauts de terre dans des installations de production d'énergie électrique avec des modules photovoltaïques, selon la revendication 5, **caractérisé en ce que** le fusible qui agit comme protection (4) est inséré dans le circuit d'activation de l'élément de connexion interne (2).

8. Équipement de détection de défaillances ou de défauts de terre dans des installations de production d'énergie électrique avec des modules photovoltaïques, selon l'une quelconque des revendications précédentes, **caractérisée en ce que**, comme éléments de mesure (5), il comprend des transformateurs à effet Hall redondants, pour lire le courant de défaut rétabli à travers l'équipement et l'unité de commande (7) qui recevra la valeur de la mesure de courant desdits transformateurs.

9. Équipement de détection de défaillances ou de défauts de terre dans des installations de production d'énergie électrique avec des modules photovoltaïques, selon l'une quelconque des revendications précédentes, **caractérisé en ce que** l'unité de commande (7) comprend un logiciel programmable qui active et désactive les éléments internes (2) pour rétablir ou interrompre le courant en fonction de sa programmation et de la lecture d'autres éléments de protection (4) et de mesure (5).

10. Équipement de détection de défaillances ou de défauts de terre dans des installations de production d'énergie électrique avec des modules photovoltaïques, selon l'une quelconque des revendications précédentes, **caractérisé en ce que** le module de communication (6) est une unité qui permet à l'équipement de communiquer, par l'intermédiaire du Wi-Fi et de l'Internet, étant apte à communiquer à distance ou à une communication en champ proche (NFC).

11. Équipement de détection de défaillances ou de défauts de terre dans des installations de production d'énergie électrique avec des modules photovoltaïques, selon l'une quelconque des revendications précédentes, **caractérisé en ce que** l'alimentation en énergie de batterie (8) est constituée d'une batterie ou d'un système d'alimentation en énergie sans interruption (ASI).

12. Équipement de détection de défaillances ou de défauts de terre dans des installations de production d'énergie électrique avec des modules photovoltaïques, selon la revendication 11, **caractérisé en ce qu'**il a un dispositif qui permet d'alimenter l'ASI à partir des propres modules photovoltaïques de l'installation.

13. Équipement de détection de défaillances ou de défauts de terre dans des installations de production d'énergie électrique avec des modules photovoltaïques, selon l'une quelconque des revendications précédentes, **caractérisé en ce que** tous les éléments susmentionnés, à l'exception des sondes de courant continu (3) et des éléments de connexion externes (1), sont compris à l'intérieur d'une valise (10) facilement transportable.

14. Équipement de détection de défaillances ou de défauts de terre dans des installations de production d'énergie électrique avec des modules photovoltaïques, selon la revendication 13, **caractérisé en ce que** la valise (10) est une valise d'extérieur rigide et résistante aux chocs, avec une poignée extensible (11) et des roues motrices (12) au niveau de sa base.

15. Équipement de détection de défaillances ou de défauts de terre dans des installations de production d'énergie électrique avec des modules photovoltaïques, selon la revendication 13 ou 14, **caractérisé en ce que** la valise (10) a un couvercle (13) sur un ou plusieurs de ses côtés, qui permet un accès rapide à différents connecteurs, sans perdre le degré de protection IP, pour connecter les éléments de connexion externes (1), les sondes de courant (3), l'alimentation en énergie (9) et les communications (6).
